# EUROPÄISCHE PATENTSCHRIFT

(11) **EP 2 401 130 B1**
(45) Veröffentlichungstag und Bekanntmachung des Hinweises auf die Patenterteilung: **16.12.2015**
(21) Anmeldenummer: 10706934.6
(22) Anmeldetag: 22.02.2010
(51) Int. Cl.: B29C 47/38, B29C 47/08, B29C 65/40

(54) **HANDSCHWEISSEXTRUDER MIT THERMISCHER TRENNUNG VON FÖRDERSCHNECKE UND ANTRIEB**
HAND-HELD WELDING EXTRUDER WITH THERMAL SEPARATION OF SCREW CONVEYOR AND DRIVE
EXTRUDEUSE-SOUDEUSE MANUELLE PRÉSENTANT UNE SÉPARATION THERMIQUE ENTRE LA VIS SANS FIN ET L'ENTRAÎNEMENT

(30) Priorität: 26.02.2009 DE 202009002653 U
(43) Veröffentlichungstag der Anmeldung: 04.01.2012
(73) Patentinhaber: Dohle Extrusionstechnik GmbH, 53809 Ruppichteroth (DE)
(72) Erfinder: DOHLE, Peter, Christian, 53809 Ruppichteroth (DE)
(74) Vertreter: Fritz, Edmund Lothar
(86) Internationale Anmeldenummer: PCT/EP2010/001105
(87) Internationale Veröffentlichungsnummer: WO 2010/097194

(56) Entgegenhaltungen:
- EP-A2- 1 023 948
- DE-A1- 19 900 080
- DE-A1- 19 952 166
- DE-U1- 29 818 757

## Beschreibung

Die vorliegende Erfindung betrifft einen Handschweißextruder umfassend eine Extrudereinheit mit Extruderschnecke und Extruderdüse sowie weiter umfassend eine Antriebsvorrichtung für die Extruderschnecke und ein zwischen Antriebsvorrichtung und Extruderschnecke angeordnetes Getriebe.

Für das Kunststoffschweißen werden heute üblicherweise Handschweißextruder verwendet, bei denen über einen Drahteinzug das Schweißmaterial einer Extruderschnecke zugeführt und von dieser granuliert wird. Die Extruderschnecke drückt das Granulat in die Schmelzkammer, wo es aufgeschmolzen wird und aus der Extruderdüse austritt. Die Fügeteile werden mittels einer an dem Handschweißextruder angebrachten Heißluftdüse auf die Schweißtemperatur erwärmt. Zur schweißnahtbildenden Ausbringung des Schmelzguts auf die zu verschweißenden Fügeteile wird ein Schweißschuh verwendet, der auf dem vorderen Endbereich des Düsenrohrs der Extruderdüse befestigbar ist.

Bei diesen Handschweißextrudern erfolgt der Antrieb über eine Antriebsvorrichtung, beispielsweise einen Elektromotor, dessen Drehzahl meist über ein Getriebe mit Untersetzung verringert und dann beispielsweise über eine Welle auf die Extruderschnecke übertragen wird. Handschweißextruder mit diesen Komponenten sind beispielsweise in der DE 20 2007 007 282 U1, DE 199 00 080 A1, DE 199 52 166 A1 und EP 1 023 948 A2 beschrieben.

Die DE 10 2004 038 967 B3 zeigt ebenfalls einen Handschweißextruder, bei dem der Antrieb über eine Bohrmaschine erfolgt, wobei ein Wechselgetriebe mit kompakter Bauform verwendet wird. Die Drehzahl der Bohrmaschine wird über das Getriebe reduziert. An dem Wechselgetriebe befindet sich ein Getriebehals, welcher in eine Aufnahme in Form einer Klemmbuchse eingreift, wobei die Abtriebswelle des Getriebes den Kopf der Extruderschnecke in Rotation versetzt. Da im vorderen Bereich der Extrudereinheit der Kunststoff aufgeschmolzen wird, entstehen dort hohe Temperaturen, beispielsweise in der Größenordnung von 250 °C. Die Wärme überträgt sich aufgrund der Wärmeleitfähigkeit der Bauteile von der Extruderschnecke über den Schneckenkopf und die Abtriebswelle auch auf das Getriebe. In der Praxis hat sich gezeigt, dass es, auch bedingt durch die vergleichsweise kompakte Bauweise dieser Handschweißextruder, zu einer Überhitzung des Getriebes kommen kann. Diese Gefahr ist besonders groß, wenn Kunststoffe mit hohen Schmelztemperaturen wie beispielsweise Fluor-Kunststoffe verarbeitet werden, bei denen Temperaturen von beispielsweise bis zu etwa 270 °C auftreten. Auch die Luftkühlung der Extruderschnecke bei den herkömmlichen Geräten reicht hier nicht aus, um das Getriebe ausreichend vor Überhitzung zu schützen, so dass es zu einem Getriebeschaden kommen kann.

Hier setzt die vorliegende Erfindung ein. Die Aufgabe der vorliegenden Erfindung besteht darin, einen Handschweißextruder der eingangs genannten Gattung zur Verfügung zu stellen, bei dem eine Überhitzung des Getriebes verhindert wird.

Die Lösung dieser Aufgabe liefert ein Handschweißextruder der eingangs genannten Gattung mit den kennzeichnenden Merkmalen des Hauptanspruchs.

Erfindungsgemäß ist vorgesehen, dass ein extruderseitiger Abschnitt der Schnecke und ein getriebeseitiger Abschnitt der Schnecke voneinander beabstandet angeordnet sind und zwischen diesen Abschnitten ein Trennelement mit schlechter Wärmeleitung angeordnet ist. Auf diese Weise kann man verhindern, dass die Wärme von dem extruderseitigen Abschnitt der Schnecke auf die Abtriebswelle und damit auf das Getriebe übertragen wird.

Erfindungsgemäß ist dabei vorgesehen, dass ein ringförmiges Trennelement aus einem Werkstoff mit vergleichsweise schlechter Wärmeleitfähigkeit in axialer Richtung zwischen dem extruderseitigen Abschnitt der Schnecke und dem getriebeseitigen Abschnitt der Schnecke angeordnet ist. Dieses ringförmige Trennelement kann beispielsweise jeweils auf einem Absatz oder einer Schulter des extruderseitigen und/oder des getriebeseitigen Abschnitts der Schnecke gelagert sein. Das erfindungsgemäße Prinzip besteht also darin, dass die bei den bekannten Extrudern bis zur Getriebewelle durchgehende Extruderschnecke nun quasi vor dem Getriebe thermisch getrennt wird.

Insbesondere ist es bevorzugt so, dass das ringförmige Trennelement sich nur über einen radial äußeren Bereich erstreckt und in einem radial inneren Bereich zwischen extruderseitigem Abschnitt und getriebeseitigem Abschnitt der Schnecke ein Freiraum angeordnet ist. Das Trennelement hält somit die beiden thermisch zu trennenden Abschnitte der Extruderschnecke auf Abstand, so dass im radial inneren Bereich keine Wärmeübertragung erfolgt. Im radial äußeren Bereich ist ebenfalls keine Wärmeübertragung möglich, da das Trennelement selbst isolierende Eigenschaften hat.

Gemäß einer bevorzugten Weiterbildung der erfindungsgemäßen Aufgabenlösung können beispielsweise die durch das Trennelement auf Abstand zueinander gehaltenen beiden Abschnitte der Extruderschnecke durch wenigstens eine sich in achsparalleler Richtung erstreckende Schraubverbindung miteinander verbunden sein. Durch diese Schraubverbindung kann auch das Trennelement selbst befestigt werden. Andere ähnliche Befestigungselemente zur Verbindung dieser Bauteile sind aber ebenfalls möglich.

Auf dem getriebeseitigen Abschnitt der Extruderschnecke ist erfindungsgemäß wenigstens ein Axialrillenkugellager angeordnet sein. Dieses Kugellager befindet sich damit bereits in dem Bereich, der von dem sich erwärmenden Abschnitt der Extruderschnecke über das Trennelement thermisch getrennt ist. Der thermisch abgetrennte Bereich der Extruderschnecke umfasst insbesondere den so genannten Schneckenkopf. Der davon thermisch getrennte extruderseitige Abschnitt der Schnecke umfasst einen an der Schnecke angeformten Konus.

Bevorzugt befindet sich an dem getriebeseitigen Abschnitt der Extruderschnecke wenigstens ein Eingriffselement für einen drehfesten Eingriff mit einem Bauelement einer Welle, beispielsweise kann diese eine Nut oder Einkerbung sein. Dort findet dann der Eingriff beispielsweise mit der Abtriebswelle des Getriebes statt. Diese Verbindung zur Übertragung des Drehmoments befindet sich erfindungsgemäß jenseits des Trennelements, während im Stand der Technik der so genannte Schneckenkopf unmittelbar mit der Schnecke verbunden ist, wodurch der Schneckenkopf die Wärme auf die Getriebewelle überträgt.

Um die thermische Trennung zu gewährleisten, besteht das Trennelement bevorzugt aus einem schlecht wärmeleitenden Kunststoff, insbesondere aus einem Duroplasten oder einem glasfaserverstärkten Kunststoff. Diese Kunststoffe haben eine ausreichende mechanische Festigkeit, können Kräfte übertragen und sind daher für die vorliegende Anwendung geeignet.

Die in den Unteransprüchen beschriebenen Merkmale betreffen bevorzugte Weiterbildungen der erfindungsgemäßen Aufgabenlösung. Weitere Vorteile der vorliegenden Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher erläutert. Dabei zeigen:
Figur 1 eine perspektivische Ansicht des vorderen Abschnitts eines beispielhaften Handschweißextruders gemäß einer möglichen Ausführungsvariante der vorliegenden Erfindung;
Figur 2 eine vergrößerte perspektivische Ansicht eines Ausschnitts im getriebeseitigen Endbereich der Extruderschnecke eines Handschweißextruders gemäß der vorliegenden Erfindung;
Figur 3 einen Längsschnitt durch den Endbereich der Extruderschnecke des Handschweißextruders von Figur 2;
Figur 4 einen Längsschnitt durch den Endbereich der Extruderschnecke gemäß einer etwas abgewandelten Ausführungsform der vorliegenden Erfindung.

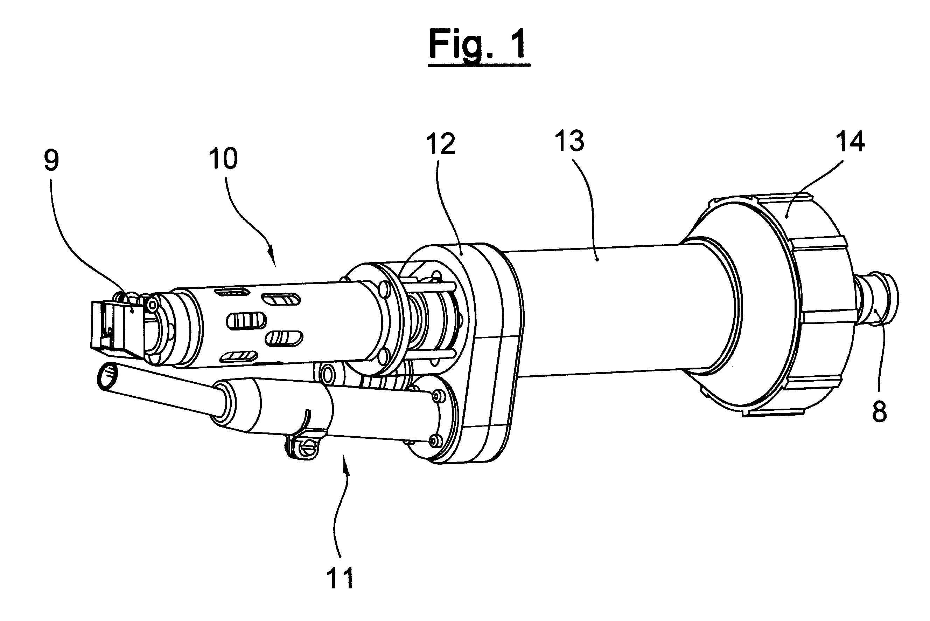

Zunächst wird auf die Figur 1 Bezug genommen, die eine perspektivische Ansicht eines Handschweißextruders gemäß einer möglichen Ausführungsvariante der vorliegenden Erfindung zeigt. Das Gehäuse des Handschweißextruders umfasst einen vorderen Bereich mit zwei voneinander getrennten Gehäusen, nämlich dem Extrudergehäuse 10 und dem Heißluftgehäuse 11, einen Übergangsabschnitt 12, einen in Achsrichtung dahinter liegenden gemeinsamen etwa zylindrischen Gehäuseabschnitt 13 und einen endseitigen im Durchmesser etwas größeren Gehäuseabschnitt 14. Der etwa zylindrische Gehäuseabschnitt 13 umfasst im wesentlichen das Motorgehäuse und das Getriebegehäuse für den Antrieb des Extruders. Druckluft kann über eine Tülle 8 am hinteren Ende in einen Ringraum um den Motor herum eintreten und gelangt dann über den Übergangsabschnitt 12 in das Heißluftgehäuse 11, wo sie erwärmt wird. Dieser Bereich des Geräts ist für die vorliegende Erfindung nicht von Belang und wird daher hier nicht näher erläutert. Auch ist die erfindungsgemäße Idee der thermischen Trennung zwischen zwei Abschnitten der Extruderschnecke nicht auf diesen Gerätetyp beschränkt, sondern grundsätzlich bei allen Handschweißextrudern anwendbar.

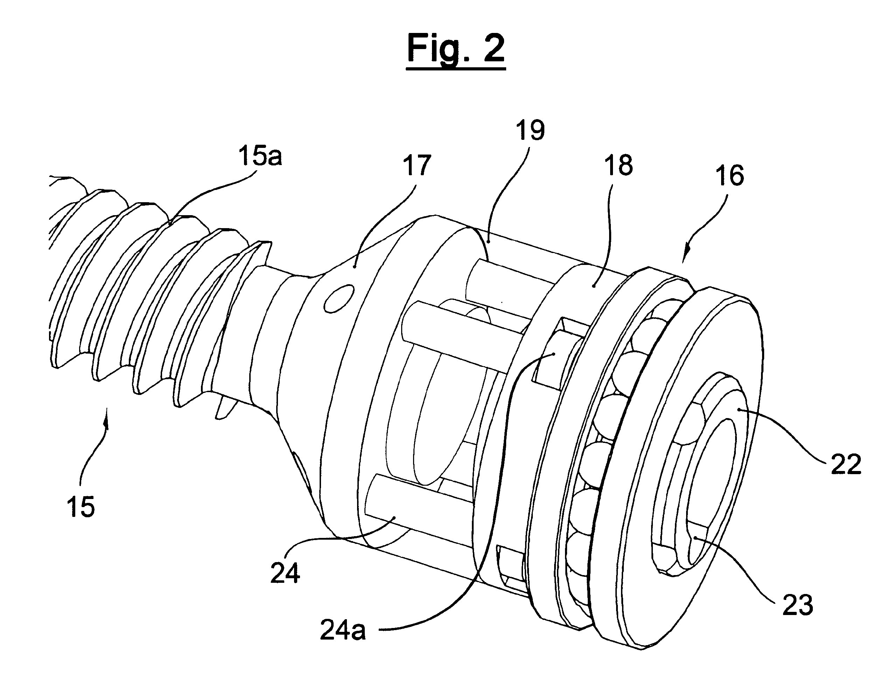

Die Extruderschnecke erstreckt sich überwiegend in dem Extrudergehäuse 10 und fördert das aufgeschmolzene Extrudat zur Düse am vorderen Ende des Geräts hin, wo es dann über den Schweißschuh 9 austritt. In axialer Verlängerung zum etwa zylindrischen gemeinsamen Gehäuseabschnitt 13, in dem sich Motor und Getriebe befinden, schließt sich vor dem Übergangsabschnitt 12 das Extrudergehäuse 10 an, dessen Achse mit dem Gehäuseabschnitt 13 fluchtet, was den Vorteil hat, dass die Abtriebswelle des Getriebes unmittelbar die Extruderschnecke 15 antreiben kann (siehe Figur 2). Die Extruderschnecke 15 umfasst in an sich bekannter Weise einen Abschnitt 15 a mit scharfkantiger Profilierung, in dessen Bereich der eingezogene Kunststoffdraht zerkleinert und granuliert wird, an den sich dann nach vorn hin die eigentliche spiralförmige Extruderschnecke anschließt.

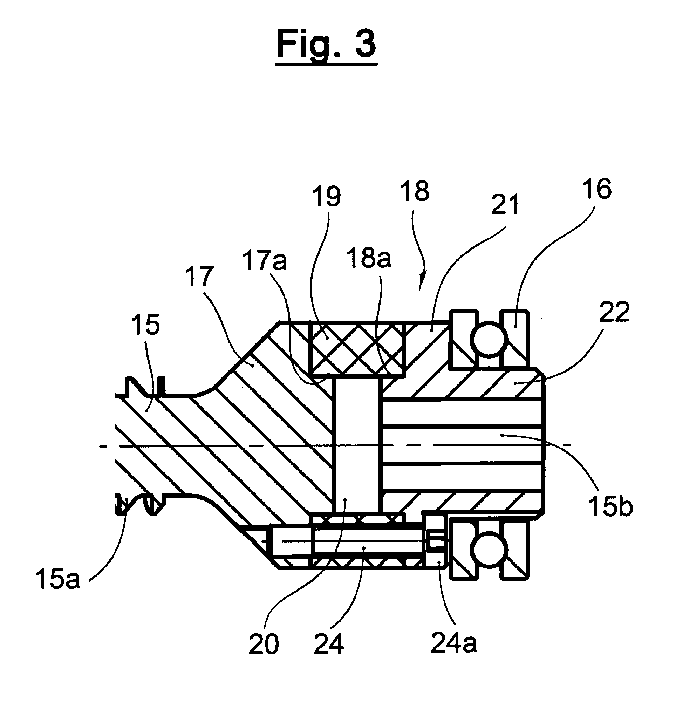

Figur 2 zeigt ebenfalls in perspektivischer Ansicht einen vergrößerten Ausschnitt des Handschweißextruders und zwar in dem vor dem Übergangsabschnitt 12 liegenden Bereich, wobei das Extrudergehäuse 10 in Figur 2 nicht dargestellt ist, so dass man einen Teil der Extruderschnecke 15 erkennen kann. In Richtung auf das hier nicht dargestellte Getriebe hin schließt sich an den Abschnitt 15 a der Extruderschnecke 15 mit scharfkantiger Profilierung ein Konus 17 an, in dessen Bereich sich der Durchmesser der Schnecke erweitert. Dieser Konus 17 bildet quasi das Ende des extruderseitigen Abschnitts der Extruderschnecke 15. Zwischen diesem metallischen Konus 17 und dem ebenfalls metallischen getriebeseitigen Abschnitt 18 der Extruderschnecke ist die Schnecke durch ein ringförmiges Trennelement aus Kunststoff 19 thermisch getrennt. In der perspektivischen Ansicht gemäß Figur 2 ist bedingt durch die Darstellung nur ein Teil des getriebeseitigen Abschnitts 18 erkennbar. Weitere Einzelheiten ergeben sich aus der Längsschnittdarstellung gemäß Figur 3, auf die nachfolgend Bezug genommen wird.

Figur 3 zeigt im Längsschnitt den Endbereich der Extruderschnecke 15. Es ist noch ein Stück des scharfkantig profilierten Abschnitts 15 a erkennbar. Anhand der Schraffur erkennt man, dass der extruderseitige Abschnitt der Extruderschnecke 15, zu dem auch der Konus 17 zählt, ein von dem getriebeseitigen Abschnitt 18 getrenntes Bauteil ist. In Richtung der Achse 15 b der Extruderschnecke 15 gesehen sind die beiden Abschnitte 17 und 18 beabstandet, so dass sich im radial inneren Bereich zwischen diesen beiden Abschnitten der Extruderschnecke ein Freiraum 20 ergibt. Der Konus 17 weist einen ringförmig umlaufenden Absatz 17 a auf, ebenso wie auch der getriebeseitige Abschnitt 18, der auch als Schneckenkopf bezeichnet wird, einen solchen ringförmig umlaufenden Absatz 18 a aufweist. Diese beiden Absätze 17 a, 18 a bilden ein Auflager für einen als Trennelement dienenden Ring 19 aus einem schlecht wärmeleitenden Kunststoff wie beispielsweise GFK oder ähnlichem.

An dem Schneckenkopf 18 ist axial im Anschluss an den Absatz 18 a ein Ringsteg 21 gebildet, in dessen Bereich der Schneckenkopf 18 seinen größten Durchmesser hat, wobei dieser Durchmesser auch dem größten Durchmesser im Bereich des zylindrischen Endabschnitts des Konus 17 entspricht und bevorzugt ebenso auch dem Durchmesser des ringförmigen Trennelements 19 aus Kunststoff, so dass der Endabschnitt des Konus 17, das ringförmige Trennelement 19 und der Schneckenkopf im Bereich seines Ringstegs 21 außen axial miteinander fluchten. Im Anschluss an den Ringsteg 21 hat der Schneckenkopf 18 noch einen rohrförmigen zylindrischen Abschnitt 22 mit geringerem Durchmesser, welcher als Sitz für das Axialrillenkugellager 16 dient. Dieser zylindrische Abschnitt 22 ist innen hohl, so dass dort das hier nicht dargestellte Ende der Abtriebswelle aufgenommen werden kann, wobei ein drehfester Eingriff mit der Welle vorgesehen ist und dazu innen im Abschnitt 22 eine Längsnut 23 gebildet ist, die auch in Figur 2 erkennbar ist.

Da das Extrudat in axialer Richtung durch das Extrudergehäuse 10 gepresst wird, ist zur Aufnahme der dabei in Gegenrichtung auftretenden Kräfte zwischen Extruderschnecke 15 und Getriebe auf dem Abschnitt 22 des Schneckenkopfs 18, welcher wiederum die Abtriebswelle konzentrisch umgibt, das Axialrillenkugellager 16 vorgesehen.

Sowohl in Figur 2 als auch in Figur 3 ist die mehrere achsparallele Schrauben 24 umfassende Schraubverbindung erkennbar, die dazu dient den getriebeseitigen Abschnitt 18 (Schneckenkopf) mit dem extruderseitigen Abschnitt (Konus 17) der Schnecke zu verbinden, wobei diese Verbindung gleichzeitig auch das als Abstandshalter dienende ringförmige Trennelement 19 umfasst. Die Köpfe 24 a der Schrauben 24 können beispielsweise in Nuten des Schneckenkopfs 18 aufgenommen sein (siehe Figur 2), so dass das Axialkugellager 16 unmittelbar an den Ringsteg 21 des Schneckenkopfs anschließen kann (siehe Figur 3).

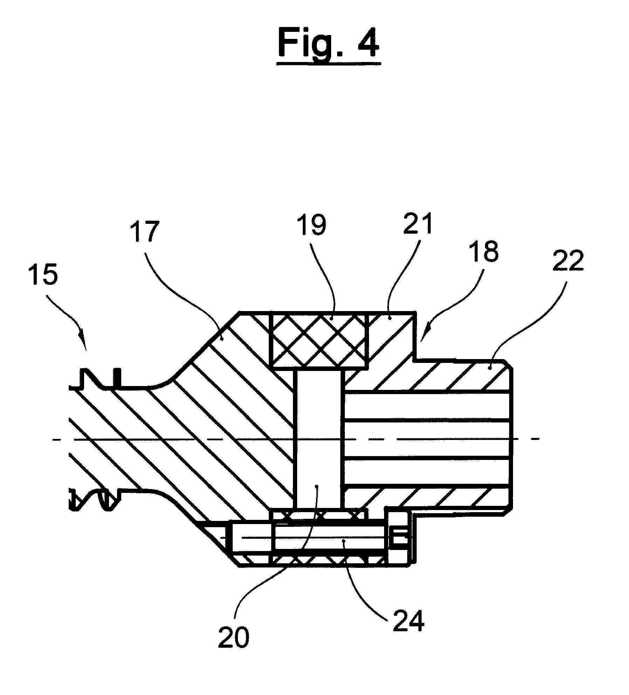

Figur 4 zeigt eine vereinfachte Variante der erfindungsgemäßen Lösung, bei der kein Axialrillenkugellager vorhanden ist, jedoch die übrigen Bauelemente im Prinzip mit der zuvor beschriebenen Lösung identisch sind, so dass im wesentlichen auf die obige Beschreibung verwiesen werden kann.

### Bezugszeichenliste

- 8: Tülle
- 9: Schweißschuh
- 10: Extrudergehäuse
- 11: Heißluftgehäuse
- 12: Übergangsabschnitt
- 13: zylindrischer Gehäuseabschnitt
- 14: endseitiger Gehäuseabschnitt
- 15: Extruderschnecke
- 15 a: scharfkantiger Abschnitt der Schnecke
- 15 b: Achse der Schnecke
- 16: Axialrillenkugellager
- 17: Konus
- 17 a: Absatz
- 18: Schneckenkopf
- 18 a: Absatz
- 19: Trennelement
- 20: Hohlraum
- 21: Ringsteg
- 22: zylindrischer Abschnitt
- 23: Längsnut
- 24: Schrauben
- 24 a: Schraubenkopf

## Patentansprüche

1. Handschweißextruder umfassend eine Extrudereinheit mit Extruderschnecke und Extruderdüse sowie weiter umfassend eine Antriebsvorrichtung für die Extruderschnecke und ein zwischen Antriebsvorrichtung und Extruderschnecke angeordnetes Getriebe,
wobei sich an einen Abschnitt (15 a) der Extruderschnecke (15) mit scharfkantiger Profilierung ein Konus (17) anschließt, in dessen Bereich sich der Durchmeser der Schnecke erweitert, wobei der Konus (17) das Ende eines extruderseitigen Abschnitts der Schnecke bildet,
wobei ein extruderseitiger Abschnitt (17) der Schnecke und ein getriebeseitiger Abschnitt (18) der Schnecke voneinander beabstandet angeordnet sind,
**dadurch gekennzeichnet, dass** in axialer Richtung zwischen dem metallischen Konus (17) und dem ebenfalls metallischen getriebeseitigen Abschnitt (18) der Extruderschnecke ein ringförmiges Trennelement (19) aus Kunststoff mit schlechter Wärmeleitung angeordnet ist und dass auf dem getriebeseitigen Abschnitt (18) der Extruderschnecke wenigstens ein Axialrillenkugellager (16) angeordnet ist.

2. Handschweißextruder nach Anspruch 1,
**dadurch gekennzeichnet, dass** das ringförmige Trennelement (19) jeweils auf einem Absatz (17 a, 18 a) oder einer Schulter des extruderseitigen und/oder des getriebeseitigen Abschnitts der Schnecke gelagert ist.

3. Handschweißextruder nach einem der Ansprüche 1 oder 2,
**dadurch gekennzeichnet, dass** das ringförmige Trennelement (19) sich nur über einen radial äußeren Bereich erstreckt und in einem radial inneren Bereich zwischen extruderseitigem Abschnitt (17) und getriebeseitigem Abschnitt (18) der Schnecke ein Freiraum (20) angeordnet ist.

4. Handschweißextruder nach einem der Ansprüche 1 bis 3,
**dadurch gekennzeichnet, dass** die durch das Trennelement (19) auf Abstand zueinander gehaltenen beiden Abschnitte (17, 18) der Extruderschnecke (15) durch wenigstens eine sich in achsparalleler Richtung erstreckende Schraubverbindung (24) miteinander verbunden sind.

5. Handschweißextruder nach einem der Ansprüche 1 bis 4,
**dadurch gekennzeichnet, dass** an dem getriebeseitigen Abschnitt (18) der Extruderschnecke wenigstens ein Eingriffselement (23) für einen drehfesten Eingriff eines Bauelements einer Welle vorgesehen ist.

6. Handschweißextruder nach einem der Ansprüche 1 bis 5,
**dadurch gekennzeichnet, dass** das Trennelement (19) aus einem Duroplasten oder einem glasfaserverstärkten Kunststoff besteht.

7. Handschweißextruder nach einem der Ansprüche 2 bis 6, **dadurch gekennzeichnet, dass** an dem getriebeseitigen Abschnitt (18) der Extruderschnecke, der einen Schneckenkopf bildet, axial im Anschluss an einen Absatz (18 a) ein Ringsteg (21) gebildet ist, in dessen Bereich der Schneckenkopf (18) seinen größten Durchmesser hat, wobei dieser Durchmesser auch dem größten Durchmesser im Bereich eines zylindrischen Endabschnitts des Konus (17) entspricht.

8. Handschweißextruder nach Anspruch 7, **dadurch gekennzeichnet, dass** der zylindrische Endabschnitt des Konus (17), das ringförmige Trennelement (19) und der Schneckenkopf (18) im Bereich seines Ringstegs (21) jeweils außen axial miteinander fluchten.

9. Handschweißextruder nach einem der Ansprüche 7 oder 8, **dadurch gekennzeichnet, dass** der Schneckenkopf (18) einen rohrförmigen zylindrischen Abschnitt (22) mit geringerem Durchmesser aufweist, welcher als Sitz für das Axialrillenkugellager (16) dient.

## Claims

1. A hand extruder comprising an extruder unit with an extruder screw and an extruder nozzle and further comprising a drive unit for the extruder screw and a gear mechanism arranged between the drive unit and the extruder screw,
wherein a section (15 a) of the extruder screw (15) with sharp-edged profiling is joined to a cone (17) in whose area the diameter of the screw widens, wherein the cone (17) forms the end of an extruder-side section of the screw,
wherein an extruder-side section (17) of the screw and a gear-side section (18) of the screw are arranged so as to be spaced apart from each other,
**characterised in that** in axial direction between the metallic cone (17) and the gear-side section (18) of the extruder screw, which is also metallic, a ring-shaped plastic separating element (19) with poor heat conduction is arranged and **in that** at least one axial groove ball bearing (16) is arranged on the gear-side section (18) of the extruder screw.

2. The hand extruder according to claim 1,
**characterised in that** the ring-shaped separating element (19) is mounted, respectively, on a shoulder (17 a, 18 a) of the extruder-side and/or gear-side section of the screw.

3. The hand extruder according to one of claims 1 or 2,
**characterised in that** the ring-shaped element (19) extends over only a radially outer area and **in that** a free space (20) is arranged in a radially inner area between the extruder-side section (17) and the gear-side section (18) of the screw.

4. The hand extruder according to one of claims 1 to 3,
**characterised in that** the two sections (17, 18) of the extruder screw (15) held spaced apart from each other by the separating element (19) are connected with each other by at least one screw connection (24) extending in axis-parallel direction.

5. The hand extruder according to one of claims 1 to 4,
**characterised in that** at least one engaging element (23) for a torque-proof engagement of a component of a shaft is provided on the gear-side section (18) of the extruder screw.

6. The hand extruder according to one of claims 1 to 5,
**characterised in that** the separating element (19) consists of a thermosetting plastic or a glass fibre-reinforced plastic.

7. The hand extruder according to one of claims 2 to 6, **characterised in that** an annular web (21) is formed on the gear-side section (18) of the extruder screw forming a screw head, axially after a shoulder (18 a), wherein the screw head (18) has its largest diameter in the area of the annular web (21), wherein this diameter also corresponds to the largest diameter in the area of a cylindrical end section of the conus (17).

8. The hand extruder according to claim 7, **characterised in that** the cylindrical end section of the cone (17), the ring-shaped separating element (19) and the screw head (18) in the area of its annular web (21), are, respectively, externally axially aligned with each other.

9. The hand extruder according to one of claims 7 or 8, **characterised in that** the screw head (18) has a tube-shaped cylindrical section (22) with a smaller diameter, which serves as a seat for the axial groove ball bearing (16).

## Revendications

1. Soudeuse-extrudeuse manuelle comprenant une unité extrudeuse avec une vis sans fin d'extrudeuse et une filière d'extrusion et comprenant par ailleurs un dispositif d'entraînement pour la vis sans fin d'extrudeuse et une transmission placée entre le dispositif d'entraînement et la vis sans fin d'extrudeuse,
sur une partie (15 a) de la vis sans fin (5) d'extrudeuse à profilage à arêtes vives se raccordant un cône (17) dans la région duquel le diamètre de la vis sans fin s'élargit, le cône (17) formant l'extrémité d'une partie située côté extrudeuse de la vis sans fin,
une partie (17) située côté extrudeuse de la vis sans fin et une partie (18) située côté transmission de la vis sans fin étant placées avec un écart mutuel,
**caractérisée en ce que** dans la direction axiale entre le cône (17) métallique et la partie (18) également métallique placée du côté transmission de la vis sans fin d'extrudeuse est placé un élément de séparation (19) annulaire en matière plastique faisant preuve d'une mauvaise conduction thermique et **en ce que** sur la partie (18) située côté transmission de la vis sans fin d'extrudeuse est placé au moins un roulement à billes (16) à rainures axiales.

2. Soudeuse-extrudeuse manuelle selon la revendication 1,
**caractérisée en ce que** l'élément de séparation (19) annulaire est logé respectivement sur un talon (17 a, 18 a) ou un épaulement de la partie située côté extrudeuse ou côté transmission de la vis sans fin.

3. Soudeuse-extrudeuse selon l'une quelconque des revendications 1 ou 2,
**caractérisée en ce que** l'élément de séparation (19) annulaire ne s'étend que sur une région extérieure radiale et **en ce que** dans une région intérieure radiale, entre la partie (17) située côté extrudeuse et la partie (18) située côté transmission de la vis sans fin est placé un espace libre (20).

4. Soudeuse-extrudeuse selon l'une quelconque des revendications 1 à 3,
**caractérisée en ce que** les deux parties (17, 18) de la vis sans fin (15) d'extrudeuse maintenues avec un écart mutuel par l'élément de séparation (19) sont reliées l'une à l'autre par au moins un assemblage par vissage (24) s'étendant dans la direction parallèle à l'axe.

5. Soudeuse-extrudeuse selon l'une quelconque des revendications 1 à 4,
**caractérisée en ce que** sur la partie (18) située coté transmission de la vis sans fin d'extrudeuse, il est prévu au moins un élément d'engagement (23) pour un engagement solidaire en rotation d'un élément constitutif d'un arbre.

6. Soudeuse-extrudeuse selon l'une quelconque des revendications 1 à 5,
**caractérisée en ce que** l'élément de séparation (19) est constitué d'une matière duroplastique ou d'une matière plastique renforcée par fibres.

7. Soudeuse-extrudeuse selon l'une quelconque des revendications 2 à 6, **caractérisée en ce que** sur la partie (18) située côté transmission de la vis sans fin d'extrudeuse qui forme une tête de vis sans fin, en direction axiale en raccordement sur un talon (18 a) est formée une barrette annulaire (21) dans la région de laquelle la tête (18) de vis sans fin possède sont plus grand diamètre, ledit diamètre correspondant également au plus grand diamètre dans la région d'une partie extrême cylindrique du cône (17).

8. Soudeuse-extrudeuse selon la revendication 7, **caractérisée en ce que** la partie extrême cylindrique du cône (17), l'élément de séparation (19) annulaire et la tête (18) de vis sans fin dans la région de sa barrette annulaire (21) sont respectivement alignés les uns sur les autres à l'extérieur, en direction axiale.

9. Soudeuse-extrudeuse selon l'une quelconque des revendications 7 ou 8, **caractérisée en ce que** la tête (18) de vis sans fin comporte une partie (22) cylindrique tubulaire de diamètre plus réduit, laquelle fait office de siège pour le roulement à billes (16) à rainures axiales.
